# EUROPÄISCHE PATENTSCHRIFT

(11) **EP 3 427 248 B1**
(45) Veröffentlichungstag und Bekanntmachung des Hinweises auf die Patenterteilung: **18.08.2021**
(21) Anmeldenummer: 17709381.2
(22) Anmeldetag: 23.02.2017
(51) Int. Cl.: G09C 1/00, H04L 9/32

(54) **ELEKTRONISCHES BAUELEMENT UND VERFAHREN ZUM AUTHENTIFIZIEREN EINES ELEKTRONISCHEN BAUELEMENTES UNTER VERWENDUNG VON CNPUF**
ELECTRONIC COMPONENT AND METHOD FOR AUTHENTICATING AN OPTOELECTRONIC COMPONENT USING CNPUF
COMPOSANT ÉLECTRONIQUE ET PROCÉDÉ D'AUTHENTIFICATION D'UN COMPOSANT ÉLECTRIQUE À L'AIDE D'UNE FONCTION PHYSIQUE INCLONABLE À BASE DE NANOTUBES DE CARBONE DITE CNPUF

(30) Priorität: 09.03.2016 DE 102016104341
(43) Veröffentlichungstag der Anmeldung: 16.01.2019
(73) Patentinhaber: Bundesdruckerei GmbH, 10969 Berlin (DE)
(72) Erfinder: PAESCHKE, Manfred, 16348 Wandlitz (DE); WILKE, Andreas, 13509 Berlin (DE); KOMAROV, Ilya, 10589 Berlin (DE); SIEGMANN, Rebekka, 13353 Berlin (DE)
(74) Vertreter: Patentship Patentanwaltsgesellschaft mbH
(86) Internationale Anmeldenummer: PCT/EP2017/054198
(87) Internationale Veröffentlichungsnummer: WO 2017/153177

(56) Entgegenhaltungen:
- EP-A2- 2 230 794
- US-A1- 2013 058 149
- US-A1- 2014 042 627
- Bundesamt Für Sicherheit In Der Informationstechnik : Bsi: "Nanotechnologie", , 1. Januar 2007 (2007-01-01), XP055252288, Gefunden im Internet: URL:https://www.bsi.bund.de/ [gefunden am 2016-02-22]
- Jeremy Hatch ET AL: "Switchable Surfaces; Superhydrophilic to Superhydrophobic", , 26. Oktober 2006 (2006-10-26), XP055372070, Gefunden im Internet: URL:http://www.chemistry.illinois.edu/rese arch/materials/seminar_abstracts/2006-2007 /Hatch.abstract_copy.pdf
- GIBSON ET AL: "Vibrations of carbon nanotubes and their composites: A review", COMPOSITES SCIENCE AND TECHNOLOGY, ELSEVIER, AMSTERDAM, NL, Bd. 67, Nr. 1, 11. November 2006 (2006-11-11), Seiten 1-28, XP005761327, ISSN: 0266-3538, DOI: 10.1016/J.COMPSCITECH.2006.03.031
- KONIGSMARK S T CHODEN ET AL: "CNPUF: A Carbon Nanotube-based Physically Unclonable Function for secure low-energy hardware design", 2014 19TH ASIA AND SOUTH PACIFIC DESIGN AUTOMATION CONFERENCE (ASP-DAC), IEEE, 20. Januar 2014 (2014-01-20), Seiten 73-78, XP032570022, DOI: 10.1109/ASPDAC.2014.6742869 [gefunden am 2014-02-18]
- SHAKYA BICKY ET AL: "Harnessing Nanoscale Device Properties for Hardware Security", 2015 16TH INTERNATIONAL WORKSHOP ON MICROPROCESSOR AND SOC TEST AND VERIFICATION (MTV), IEEE, 3. Dezember 2015 (2015-12-03), Seiten 42-47, XP032950298, DOI: 10.1109/MTV.2015.18 [gefunden am 2016-08-22]
- DEEPU ROY ET AL: "Comb Capacitor Structures for On-Chip Physical Uncloneable Function", IEEE TRANSACTIONS ON SEMICONDUCTOR MANUFACTURING, IEEE SERVICE CENTER, PISCATAWAY, NJ, US, Bd. 22, Nr. 1, 1. Februar 2009 (2009-02-01), Seiten 96-102, XP011243327, ISSN: 0894-6507, DOI: 10.1109/TSM.2008.2010738
- Thomas Esbach ET AL: "A New Security Architecture for Smartcards Utilizing PUFs" In: "ISSE 2012 Securing Electronic Business Processes", 1. Januar 2012 (2012-01-01), Springer Fachmedien Wiesbaden, Wiesbaden, XP055325530, ISBN: 978-3-658-00333-3 Seiten 180-194, DOI: 10.1007/978-3-658-00333-3_18, Absatz [03.1]
- Nxp: "PUF-Physical uncloneable functions : Protecting next-generation Smart Cards ICs with SRAM-based PUS", , 1. Oktober 2013 (2013-10-01), XP055313039, Gefunden im Internet: URL:www.nxp.com [gefunden am 2016-10-21]
- ONCLIN S ET AL: "Engineering silicon oxide surfaces using self-assembled monolayers", ANGEWANDTE CHEMIE INTERNATIONAL EDITION, VERLAG CHEMIE, vol. 44, no. 39, 19 September 2005 (2005-09-19), pages 6282-6304, XP009143275, ISSN: 1433-7851, DOI: 10.1002/ANIE.200500633

## Beschreibung

Die vorliegende Erfindung betrifft das Gebiet der Authentifizierung von elektronischen Bauelementen.

Die Druckschrift "Bundesamt Für Sicherheit in Der Informationstechnik: Bsi: "Nanotechnologie", 1. Januar 2007 (2007-01-01), XP055252288, [gefunden am 2016-02-22]" beschreibt einen möglichen Einsatz von OLEDs im Umfeld von deutschen Personalausweisen.

Die Offenlegungsschrift EP 2 230 794 A2 offenbart die Verwendung von sogenannten SHIC-Systemen bei der Erzeugung von Schlüsselpaaren im Rahmen einer Verschlüsselung. Hierbei steht die Abkürzung "SHIC" für "Super High Information Content".

Die Druckschrift "Jeremy Hatch ET AL: "Switchable Surfaces; Superhydrophilic to Superhydrophobic", 26. Oktober 2006 (2006-10-26), XP055372070, Gefunden im Internet: URL:http://www.chemistry.illinois.edu/research/materials/seminar_abstracts/2006-2007/Hatch.abstract_copy.pdf" beschäftigt sich mit dem Themengebiet von superhydrophilen Oberflächen.

Die Druckschrift "GIBSON ET AL: "Vibrations of carbon nanotubes and their composites: A review", COMPOSITES SCIENCE AND TECHNOLOGY, ELSEVIER, AMSTERDAM, NL, Bd. 67, Nr. 1, 11. November 2006 (2006-11-11), Seiten 1-28, XP005761327, ISSN: 0266-3538, DOI: 10.1016/J.COMPSCITECH.2006.03.031" beschreibt Schwingungen in Kohlenstoffnanoröhren.

Die Druckschrift "KONIGSMARK S T CHODEN ET AL: "CNPUF: A Carbon Nanotubebased Physically Unclonable Function for secure low-energy hardware design", 2014 19TH ASIA AND SOUTH PACIFIC DESIGN AUTOMATION CONFERENCE (ASP-DAC), IEEE, 20. Januar 2014 (2014-01-20), Seiten 73-78, XP032570022, DOI: 10.1109/ASPDAC.2014.6742869 [gefunden am 2014-02-18]" beschreibt eine "physically unclonable function" basierend auf Kohlenstoffnanoröhren.

Die Druckschrift "SHAKYA BICKY ET AL: "Harnessing Nanoscale Device Properties for Hardware Security", 2015 16TH INTERNATIONAL WORKSHOP ON MICROPROCESSOR AND SOC TEST AND VERIFICATION (MTV), IEEE, 3. Dezember 2015 (2015-12-03), Seiten 42-47, XP032950298, DOI: 10.1109/MTV.2015.18 [gefunden am 2016-08-22]" beschreibt Eigenschaften von Sicherheitshardware, die auf der Nanotechnologie basiert.

Die Druckschrift "DEEPU ROY ET AL: "Comb Capacitor Structures for On-Chip Physical Uncloneable Function", IEEE TRANSACTIONS ON SEMICONDUCTOR MANUFACTURING, IEEE SERVICE CENTER, PISCATAWAY, NJ, US, Bd. 22, Nr. 1, 1. Februar 2009 (2009-02-01), Seiten 96-102, XP011243327, ISSN: 0894-6507, DOI: 10.1109/TSM.2008.2010738" offenbart Kondensatorstrukturen für eine "physical uncloneable function".

Die Druckschrift "Thomas Esbach ET AL: "A New Security Architecture for Smartcards Utilizing PUFs" in: "ISSE 2012 Securing Electronic Business Processes", 1. Januar 2012 (2012-01-01), Springer Fachmedien Wiesbaden, Wiesbaden, XP055325530, ISBN: 978-3-658-00333-3, Seiten 180-194, DOI: 10.1007/978-3-658-00333-3_18" offenbart eine Sicherheitsarchitektur für Smartkarten.

Die Druckschrift "Nxp: "PUF-Physical uncloneable functions: Protecting next-generation Smart Cards ICs with SRAM-based PUS", 1. Oktober 2013 (2013-10-01), XP055313039 [gefunden am 2016-10-21]" offenbart Smartkarten mit einer "physical uncloneable function".

Sicherheitsmerkmale wie Hologramme oder Wasserzeichen auf Gegenständen, beispielsweise Identifikationsdokumenten oder technischen Geräten, können die Authentizität der Gegenstände beweisen und eine Fälschung der Gegenstände erschweren. Die Sicherheitsmerkmale weisen dabei meist charakteristische Eigenschaften auf, welche bei einer Authentifizierung überprüft werden können. Solche Sicherheitsmerkmale können auch elektronische Bauelemente wie integrierte Schaltungen oder Transistoren umfassen.

Idealerweise sind Sicherheitsmerkmale besonders einfach zu Authentifizieren und gleichzeitig besonders schwierig oder unmöglich zu fälschen. Ein Sicherheitsmerkmal zu schaffen, welches diese Eigenschaften umfasst, und gleichzeitig für eine Anbringung an Gegenständen mit einer geringen Größe, insbesondere Identifikationsdokumenten oder Banknoten, geeignet ist, ist jedoch schwierig.

Es ist daher die Aufgabe der vorliegenden Erfindung, ein effizientes Konzept für ein elektronisches Bauelement zu schaffen, welches besonders effizient authentifiziert werden kann und besonders schwierig zu duplizieren ist.

Gemäß einem ersten Aspekt betrifft die Erfindung ein elektronisches Bauelement, das ausgebildet ist, ein elektromagnetisches Feld zu erzeugen, wobei das elektronische Bauelement ein Sicherheitsmerkmal für Authentifizierungszwecke bildet, mit einem Bauelementabschnitt, welcher dem elektromagnetischen Feld aussetzbar ist, und einer Molekularschicht zur Beeinflussung einer elektrischen Charakteristik des elektronischen Bauelementes, wobei die Molekularschicht auf dem Bauelementabschnitt angeordnet und durch das elektrische Feld in einen Anregungszustand versetzbar ist, um die elektrische Charakteristik des elektronischen Bauelementes zu beeinflussen. Dadurch wird der Vorteil erreicht, dass ein elektronisches Bauelement mit einer elektrischen Charakteristik geschaffen werden kann, welche durch die Molekularschicht auf einzigartige und schwer zu kopierenden oder zu fälschende Art und Weise beeinflusst wird. Das Bauelement kann als Sicherheitsmerkmal eingesetzt werden.

Das elektronische Bauelement und/oder die Molekularschicht und/oder die elektrische Charakteristik des Bauelements können eine physikalisch unklonbare Funktion (physical unclonable function, PUF) bilden. Das elektronische Bauelement kann auf oder an einem Gegenstand, beispielsweise einem Dokument, wie einem Authentifikationsdokument oder einer Banknote, einem technischen Gerät, wie einem Smartphone oder einem Laptop, oder einem Zier- oder Luxusgegenstand, wie Schmuck oder einer Uhr, angeordnet sein, und kann zur Authentifizierung, insbesondere zur Überprüfung der Echtheit, des Gegenstandes eingesetzt werden. Das elektronische Bauelement kann somit ein Sicherheitsmerkmal zum Authentifizieren des Gegenstandes sein.

Die Molekularschicht weist eine Mehrzahl von orientierten Molekülen und/oder Polymerketten auf, welche auf dem Bauelementabschnitt angeordnet und jeweils mit einem Ende chemisch oder physikalisch mit dem Bauelementabschnitt gebunden sind, insbesondere mittels einer Trägerschicht auf dem Bauelementabschnitt. Die orienteierten Moleküle und/oder Polymerketten können mit jeweils einem Ende mit dem Bauelementabschnitt verankert sein. Die orientierten Molekülen und/oder Polymerketten können zufällige auf der Trägerschicht angeordnet sein.

Die orientierten Moleküle und/oder Polymerketten können elektromagnetisch geladen sein. Die orientierten Moleküle und/oder Polymerketten können als längliche Ketten oder Kettenstrukturen ausgebildet sein, beispielsweise lineare Polymere und/oder vernetzte Polymere, wobei die Ketten oder Kettenstrukturen mechanisch flexibel oder steif sein können. Die Polymerketten können synthetische Polymere, beispielsweise Alkylketten mit weiteren funktionalen Gruppen, umfassen. Die Polymerketten können ferner natürliche Polymere wie beispielsweise DNA umfassen. Das nicht auf dem Bauelementabschnitt bzw. der Trägerschicht gebundene bzw. verankerte Ende der Moleküle oder Polymerketten kann von der Trägerschicht abstehen.

Die orientierten Moleküle oder Polymerketten sind ansprechend auf das elektrische Feld aus einer Ruhelage auslenkbar und ausgebildet, bei einer Verringerung des elektromagnetischen Feldes in die Ruhelage zurückkehren, wobei der Anregungszustand durch die Auslenkung der orientierten Moleküle oder Polymerketten aus der Ruhelage und/oder die Rückkehr der orientierten Moleküle oder Polymerketten in die Ruhelage bestimmt ist. Dadurch wird der Vorteil erreicht, dass die elektrische Charakteristik durch die Molekularschicht auf einzigartige und schwer zu kopierende oder zu fälschende Art und Weise beeinflusst werden kann.

Gemäß einer Ausführungsform ist die Beeinflussung der charakteristischen Eigenschaft des elektronischen Bauelements durch die Auslenkung der orientierten Moleküle und/oder Polymerketten aus der Ruhelage und/oder Rückkehr der orientierten Moleküle oder Polymerketten in die Ruhelage festgelegt.

Die genaue Bewegung orientierten Moleküle und/oder Polymerketten bei der Rückkehr in die Ruhelage kann von einer Vielzahl von Faktoren abhängen, insbesondere der Art der Moleküle oder Polymerketten, der Länge der Moleküle oder Polymerketten und der Dichte bzw. der Verteilung der Mehrzahl von Molekülen oder Polymerketten auf dem Bauelementabschnitt. Aufgrund der großen Zahl von Molekülen oder Polymerketten auf dem Bauelementabschnitt kann sich daraus ein einzigartiges und schwer zu kopierendes Bewegungsmuster ergeben, welches die elektrische Charakteristik des elektronischen Bauteils auf eine charakteristische Art und Weise beeinflusst.

Gemäß einer Ausführungsform ist die Molekularschicht ausgebildet, ansprechend auf das elektrische Feld oder auf eine Änderung des elektromagnetischen Feldes in dem Anregungszustand ein elektromagnetisches Überlagerungsfeld zu erzeugen, das mit dem elektromagnetischen Feld überlagerbar ist, wobei eine Überlagerung des elektromagnetischen Feldes und des elektromagnetischen Überlagerungsfeldes eine Änderung der elektrischen Charakteristik des elektronischen Bauelementes bewirkt. Dadurch wird der Vorteil erreicht, dass die elektrische Charakteristik des elektronischen Bauelementes effizient beeinflusst werden kann.

Gemäß einer Ausführungsform bewirkt das elektrische Feld oder eine Änderung des elektromagnetischen Feldes eine Änderung der Orientierung von Dipolmomenten, insbesondere elektromagnetischen oder magnetischen Dipolmomenten, der Molekularschicht, insbesondere einer Dipolschicht der Molekularschicht, wobei der Anregungszustand durch die Änderung der Orientierung der Dipolmomente bestimmt ist.

Dadurch wird der Vorteil erreicht, dass die Molekularschicht effizient in den Anregungszustand versetzt werden kann.

Gemäß einer Ausführungsform ist die Molekularschicht, insbesondere eine Dipolschicht der Molekularschicht, durch eine Änderung des elektromagnetischen Feldes in eine elektrische Schwingung versetzbar, welche den Anregungszustand bestimmt, und wobei die elektrische Schwingung die elektrische Charakteristik des elektronischen Bauteils beeinflusst. Dadurch wird der Vorteil erreicht, dass die elektrische Charakteristik des elektronischen Bauelementes effizient beeinflusst werden kann.

Gemäß einer Ausführungsform ist der Anregungszustand von einer Feldstärke des elektromagnetischen Feldes oder von einer zeitlichen Änderungsrate, insbesondere einer Frequenz, der Feldstärke des elektromagnetischen Feldes abhängig, wodurch die elektrische Charakteristik des elektronischen Bauelementes von der Feldstärke des elektromagnetischen Feldes oder von der zeitlichen Änderungsrate der Feldstärke des elektromagnetischen Feldes abhängig ist.

Gemäß einer Ausführungsform ist der Bauelementabschnitt ein Oberflächenabschnitt, insbesondere ein elektromagnetisch passiver Oberflächenabschnitt, des elektronischen Bauelementes, oder ist der Bauelementabschnitt vorgesehen, elektrische Ladung zu führen.

Gemäß einer Ausführungsform ist die Molekularschicht unmittelbar mit dem Bauelementabschnitt verankert, insbesondere durch eine stoffschlüssige Bindung, eine kovalente Bindung, eine ionische Bindung, eine Wasserstoffbindung oder eine Absorptionsbindung, oder wobei die Molekularschicht mittels einer Trägerschicht, insbesondere einer Metallschicht wie Goldschicht oder einem elektromagnetisch leitfähigem Oxid, oder einer dielektrischen Schicht, oder einer Kunststoffschicht oder einer Halbleiterschicht, auf dem Bauelementabschnitt angeordnet ist. Dadurch wird der Vorteil erreicht, dass die Molekularschicht effizient und stabil mit bzw. auf dem Bauelementabschnitt verankert bzw. angeordnet werden kann.

Gemäß einer Ausführungsform ist der Bauelementabschnitt ausgebildet, elektrische Ladung zu führen und zumindest einen Teil des elektromagnetischen Feldes zu erzeugen. Dadurch wird der Vorteil erreicht, dass das elektrische Feld effizient erzeugt werden kann.

Gemäß einer Ausführungsform ist der Bauelementabschnitt ein Halbleiter-Ladungskanal, insbesondere ein Transistor-Ladungskanal, ein Transistor-Gate, oder ein Dioden-Ladungskanal, oder ein Dielektrikum eines Kondensators.

Gemäß einer Ausführungsform ist die elektrische Charakteristik eine elektrische Kennlinie, insbesondere eine Spannungskennlinie, eine Stromkennlinie, eine Strom-Spannungskennlinie, eine Leistungskennlinie, oder eine Frequenzcharakteristik. Dadurch wird der Vorteil erreicht, dass die elektrische Charakteristik effizient mittels einer Strom- und/oder Spannungsmessung erfasst werden kann.

Gemäß einer Ausführungsform ist das elektronische Bauelement ein elektronischer Halbleiterschaltkreis, insbesondere ein Chip, ein Transistor, eine Diode oder ein Kondensator. Dadurch wird der Vorteil erreicht, dass das elektronische Bauelement als gewöhnliches Bauelement in bekannten technischen Geräten oder Vorrichtungen eingesetzt werden kann.

Gemäß einer Ausführungsform bildet die Molekularschicht eine physikalisch unklonbare Funktion (physical unclonable funtion (PUF)) oder ein Sicherheitsmerkmal zur Authentifizierung des elektronischen Bauelementes. Dadurch wird der Vorteil erreicht, dass das Bauelement oder ein Gegenstand, welcher das elektronische Bauelement aufweist, effizient authentifiziert werden kann.

Bei der Authentifizierung des elektronischen Bauelements kann die elektrische Charakteristik bzw. die Beeinflussung der elektrischen Charakteristik des elektronischen Bauelements durch die Molekularschicht im Anregungszustand untersucht werden. Diese Beeinflussung hängt unter anderem von dem genauen Aufbau der Molekularschicht ab, wobei die Molekularschicht aufgrund ihrer hohen Komplexität besonders schwierig zu kopieren, zu fälschen oder zu klonen ist.

Das elektronische Bauelement weist einen Kontaktabschnitt auf, an welchem eine elektrische Größe, insbesondere eine elektrische Ausgangsspannung oder ein elektrischer Ausgangsstrom, welche die elektrische Charakteristik repräsentiert, abgreifbar ist. Dadurch wird der Vorteil erreicht, dass die elektrische Charakteristik effizient erfasst werden kann.

Gemäß einem zweiten Aspekt betrifft die Erfindung eine Authentifikationsvorrichtung, mit einem Sicherheitsmerkmal zur Authentifizierung der Authentifikationsvorrichtung, wobei das Sicherheitsmerkmal durch das elektronische Bauelement nach dem ersten Aspekt der Erfindung gebildet ist. Dadurch wird der Vorteil erreicht, dass eine Authentifikationsvorrichtung geschaffen werden kann, welche effizient mit dem elektronischen Bauelement authentifiziert werden kann.

Gemäß einer Ausführungsform ist die Authentifikationsvorrichtung ein Authentifikationsdokument zur Authentifikation einer Person, wobei das elektronische Bauelement ein elektronischer Chip des Authentifikationsdokumentes ist, oder wobei das elektronische Bauelement in einem Dokumentenkörper des Authentifikationsdokumentes, insbesondere zwischen zwei Materialschichten des Dokumentenkörpers, eingebettet oder einlaminiert ist. Dadurch wird der Vorteil erreicht, dass ein Authentifikationsdokument geschaffen werden kann, welche effizient mit dem elektronischen Bauelement authentifiziert werden kann. Der Dokumentenkörper kann als Kartenkörper ausgebildet sein, oder kann einen Kartenkörper umfassen.

Die Authentifikationsvorrichtung kann ferner in ein technisches Gerät, insbesondere ein Kommunikationsgerät wie ein Wearable-Device integriert sein, welches im Kontext von Internet of Things bzw. zwischen Maschinen im Kontext Industrie 4.0 einsetzbar ist. Die Authentifikationsvorrichtung kann zur Authentifizierung des Gerätes, beispielsweise zur Maschinenauthentifizierung, eingesetzt werden.

Gemäß einem dritten Aspekt betrifft die Erfindung daher die Verwendung des elektronischen Bauelementes nach dem ersten Aspekt zur Maschinenauthentifizierung, insbesondere zur Authentifizierung von Maschinen durch Maschinen, beispielsweise in einem Industrie 4.0 Umfeld, oder zur Authentifizierung von tragbaren Geräten,

insbesondere kommunikationsfähigen tragbaren Geräten wie Wearables, insbesondere im Kontext von Internet of Things.

Gemäß einem vierten Aspekt betrifft die Erfindung ein Verfahren zum Authentifizieren des elektronischen Bauelementes nach dem ersten Aspekt der Erfindung, mit Beaufschlagen des elektronischen Bauelementes mit elektrischer Energie, um das elektronische Bauelement in Betrieb zu setzen, Erfassen der elektrischen Charakteristik des elektronischen Bauelementes im Betrieb, und Vergleichen der elektrischen Charakteristik mit einer Referenzcharakteristik, um das elektronische Bauelement zu authentifizieren. Dadurch wird der Vorteil erreicht, dass das elektronische Bauelement effizient auf der Basis der elektrischen Charakteristik authentifiziert werden kann.

Gemäß einer Ausführungsform umfasst das Verfahren ein Beaufschlagen des elektronischen Bauelementes mit einem zusätzlichen äußeren elektromagnetischen Feld, und ein Erfassen der elektrischen Charakteristik des elektronischen Bauelementes bei Vorliegen des äußeren elektromagnetischen Feldes. Dadurch wird der Vorteil erreicht, dass die elektrische Charakteristik, welche aufgrund des äußeren Feldes auf einzigartige und schwer zu kopierende oder zu fälschende Art und Weise beeinflusst wird, effizient erfasst werden kann.

Die Erfindung kann in Hardware und/oder Software realisiert werden.
- Fig. 1: eine schematische Darstellung eines elektronischen Bauelements;
- Fig. 2: eine schematische Darstellung des elektronischen Bauelements aus Fig. 1, welches als Transistor ausgebildet ist, und welches eine Molekularschicht aus Polymerketten aufweist;
- Fig. 3: eine schematische Darstellung eines Authentifikationsdokuments; und
- Fig. 4: ein Ablaufdiagramm eines Verfahrens zum Authentifizieren eines elektronischen Bauelementes.

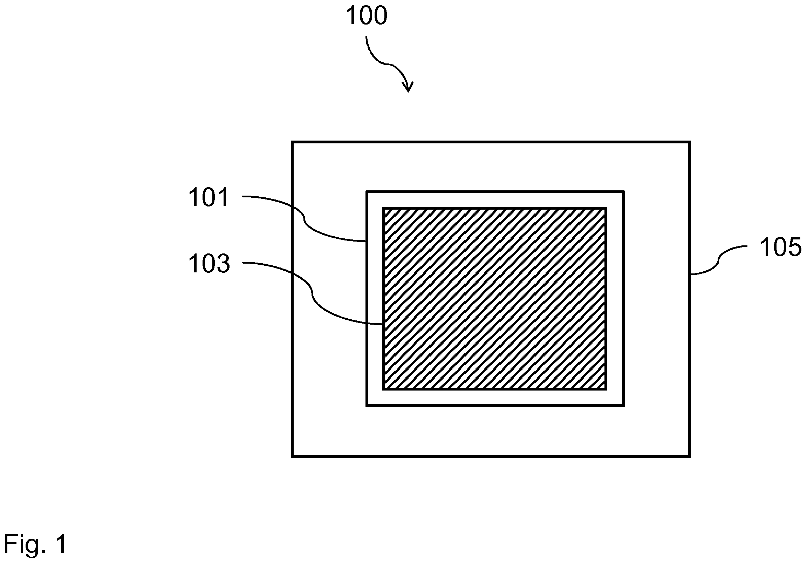

Fig. 1 zeigt eine schematische Darstellung eines elektronischen Bauelementes 100, das ausgebildet ist, ein elektromagnetisches Feld zu erzeugen, gemäß einer Ausführungsform.

Das elektronische Bauelement 100 umfasst einen Bauelementabschnitt 101, welcher dem elektromagnetischen Feld aussetzbar ist, und einer Molekularschicht 103 zur Beeinflussung einer elektrischen Charakteristik des elektronischen Bauelementes 100, wobei die Molekularschicht 103 auf dem Bauelementabschnitt 101 angeordnet und durch das elektrische Feld in einen Anregungszustand versetzbar ist, um die elektrische Charakteristik des elektronischen Bauelementes 100 zu beeinflussen.

Das elektronische Bauelement 100 und/oder die Molekularschicht 103 und/oder die elektrische Charakteristik des Bauelements 100 können eine physikalisch unklonbare Funktion (physical unclonable function, PUF) bilden. Das elektronische Bauelement 100 kann auf oder an einem Gegenstand, beispielsweise einem Dokument, wie einem Authentifikationsdokument oder einer Banknote, einem technischen Gerät, wie einem Smartphone oder einem Laptop, oder einem Zier- oder Luxusgegenstand, wie Schmuck oder einer Uhr, angeordnet sein, und kann zur Authentifizierung, insbesondere zur Überprüfung der Echtheit, des Gegenstandes eingesetzt werden. Das elektronische Bauelement 100 kann somit ein Sicherheitsmerkmal zum Authentifizieren des Gegenstandes sein.

Ferner kann die Molekularschicht 103 ein Sicherheitsmerkmal zur Authentifizierung des elektronischen Bauelementes 100 bilden. Bei der Authentifizierung des elektronischen Bauelements 100 kann die Beeinflussung der elektrischen Charakteristik des elektronischen Bauelements 100 durch die Molekularschicht 103 im Anregungszustand untersucht werden. Diese Beeinflussung hängt unter anderem von dem genauen Aufbau der Molekularschicht 103 ab, wobei die Molekularschicht 103 aufgrund ihrer hohen Komplexität, insbesondere ihrem Aufbau aus einer Vielzahl von Einzelmolekülen, besonders schwierig zu kopieren, zu fälschen oder zu klonen ist.

Die Molekularschicht 103 kann eine molekulare Dipolschicht, insbesondere eine molekulare Dipolschicht mit orientierten Molekülen oder Polymerketten bilden. Die molekulare Dipolschicht kann ansprechend auf das elektrische Feld in den Anregungszustand versetzbar sein.

Der Bauelementabschnitt 101 kann ein Oberflächenabschnitt, insbesondere ein elektromagnetisch passiver Oberflächenabschnitt, des elektronischen Bauelementes 100 sein. Der Bauelementabschnitt 101 kann ferner in einem Innenraum des elektronischen Bauelementes 100 angeordnet sein. Ferner kann der Bauelementabschnitt 101 vorgesehen sein, elektrische Ladung zu führen.

Das elektronische Bauelement 100 kann ferner einen Kontaktabschnitt aufweisen, an welchem eine elektrische Größe, insbesondere eine elektrische Ausgangsspannung oder ein elektrischer Ausgangsstrom, welche die elektrische Charakteristik repräsentiert, abgreifbar ist.

Das elektronische Bauelement 100 kann ein elektronischer Halbleiterschaltkreis, insbesondere ein Chip, ein Transistor, eine Diode oder ein Kondensator sein. Das elektronische Bauelement 100 kann ferner Teil einer Solarzelle sein. Somit kann das elektronische Bauelement 100 als gewöhnliches Bauelement in bekannten technischen Geräten oder Vorrichtungen eingesetzt werden und kann neben der Authentifizierung der technischen Geräte noch weitere technische Aufgaben erfüllen.

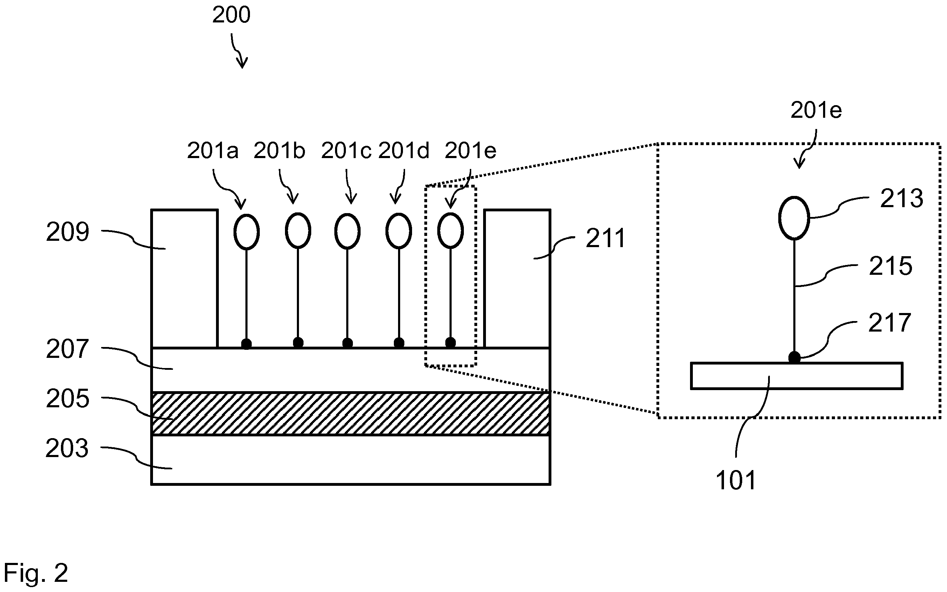

Fig. 2 zeigt eine schematische Darstellung des elektronischen Bauelements 100 aus Fig.1, welches als Transistor 200 ausgebildet ist, und welches eine Molekularschicht 103 aus Polymerketten 201 a-e umfasst, gemäß einer Ausführungsform.

Der Transistor 200 umfasst ein Transistor-Gate 203, eine dielektrische Schicht 205, einen Transistor-Kanal 207, sowie ein Transistor-Source 209 und einen Transistor-Drain 211.

Die Molekularschicht 103 ist in Fig. 2 auf dem Transistor-Kanal 207 zwischen dem Transistor-Source 209 und dem Transistor-Drain 211 angeordnet bzw. verankert. Dabei bildet der Transistor-Kanal 207 den Bauelementabschnitt 101 aus Fig. 1. Der Transistor-Kanal 207 kann einen Transistor-Ladungskanal, insbesondere einen Halbleiter-Ladungskanal, bilden. Der Transistor-Kanal 207 kann ein Silizium-Kanal sein.

Das elektrische Feld kann ein elektromagnetisches Feld zwischen Transistor-Source 209 und Transistor-Drain 211 sein und kann durch Anlegen einer Spannung zwischen Transistor-Source 209 und Transistor-Drain 211 erzeugt werden. Das elektrische Feld kann ferner ein elektromagnetisches Feld sein, welches durch Anlegen einer Spannung zwischen Transistor-Source 209 und Transistor-Gate 203 oder Transistor-Drain 211 und Transistor-Gate 203 erzeugt wird.

Die elektrische Charakteristik kann eine elektrische Kennlinie, insbesondere eine Strom-Spannungs-Kennlinie oder ein Abschnitt einer Strom-Spannungs-Kennlinie, des Transistors 200, sein. Die elektrische Charakteristik kann ferner eine Spannungskennlinie, eine Stromkennlinie, eine Leistungskennlinie, oder eine Frequenzcharakteristik sein.

Fig. 2 zeigt ferner eine vergrößerte Darstellung einer Polymerkette 201e der Molekularschicht 103.

Die Polymerkette 201e umfasst eine funktionale Oberflächengruppe 213, einen Spacer 215 und eine funktionale Kopfgruppe 217.

Die funktionale Kopfgruppe 217 kann ein Linkermolekül, beispielsweise Thiole, umfassen, welches die Polymerkette mit dem Bauelementabschnitt 101 bzw. dem Transistor-Kanal 207 verankert. Die funktionale Kopfgruppe 217 kann ferner -SiCl₃, -Si(OCH₃)₃, -Si(OC₂H₅)₃ oder ähnliche Verbindungen umfassen. Der Spacer 215 kann eine Alkylkette umfassen. Die funktionale Oberflächengruppe 213 kann beispielsweise Alkohole, Ketone oder Aldehyde umfassen.

Die Polymerketten 201a-e können elektromagnetisch geladen sein, beispielsweise Polyelektrolyte. Die Polymerketten 201a-e können mechanisch flexibel oder steif sein. Insbesondere kann die mechanische Flexibilität der Polymerketten 201a-e von ihrer Länge und/oder ihrer elektromagnetischen Ladung abhängen.

Die Polymerketten 201a-e können mittels kovalenter Bindungen, ionischer Bindungen, van-der-Waals Bindungen, Wasserstoffbrückenbindungen oder Adsorption auf dem Bauelementabschnitt 101 verankert sein. Die Verankerung kann mittels der funktionalen Kopfgruppe 217 erfolgen. Das nicht auf dem Bauelementabschnitt 101 verankerte Ende der Polymerketten 201a-e kann, wie in Fig. 2 gezeigt, von dem Bauelementabschnitt 101 abstehen.

Die Polymerketten 201a-e, insbesondere die jeweilige Oberflächengruppe 213 oder der Spacer 215, können ferner ein Dipolmoment, insbesondere ein elektromagnetisches Dipolmoment oder ein magnetisches Dipolmoment, aufweisen.

Gemäß einer Ausführungsform bilden die Polymerketten 201a-e eine self-assembled Monolayer (SAM) auf dem Transistor-Kanal 207.

Der Artikel S. Onclin, et al. "Engineering silicon oxide surfaces using self-assembled monolayers." Angew. Chem. Int. Ed., 44, p. 628-6304, 2005 beschreibt beispielsweise vergleichbare funktionalisierte molekulare Monolayer, welche eine Dicke von nur wenigen Nanometern aufweisen, und welche mit verschiedenen Herstellungsverfahren erzeugt werden können.

Die Polymerketten 201a-e befinden sich in Fig. 2 in einer Ruhelage, beispielweise weil keine Spannung zwischen Transistor-Source 209 und Transistor-Drain 211 angelegt ist (U_{SD} = 0). Die Polymerketten 201a-e in der Ruhelage stehen beispielsweise senkrecht von dem Transistorkanal 207 ab, aufgrund von gegenseitiger Abstoßung der gleich geladenen Polymerketten 201a-e.

Die Polymerketten 201a-e können ansprechend auf das elektrische Feld, insbesondere ein elektromagnetisches Feld zwischen Transistor-Source 209 und Transistor-Drain 211, aus der Ruhelage ausgelenkt werden und können ferner bei einer Verringerung des elektromagnetischen Feldes in die Ruhelage zurückkehren.

Der Anregungszustand der Molekularschicht 103 kann durch die Auslenkung der Polymerketten 201a-e und/oder die Rückkehr der Polymerketten 201a-e in die Ruhelage bestimmt sein. Ferner kann die Beeinflussung der charakteristischen Eigenschaft des elektronischen Bauelements 100, insbesondere die Strom-Spannungs-Kennlinie des Transistors 200, durch die Auslenkung der Polymerketten 201a-e aus der Ruhelage und die anschließende Rückkehr in die Ruhelage festgelegt sein.

Bei der Rückkehr in die Ruhelage können die Polymerketten 201a-e schwingen bzw. oszillieren, analog zu einer Vielzahl an physikalischen Pendeln. Diese Bewegung kann insbesondere kollektiv erfolgen.

Die Bewegung, insbesondere die kollektive Oszillation, der Polymerketten 201a-e kann eine zeitliche und spektrale Veränderung der elektrischen Charakteristik bewirken. Beispielsweise ist die dielektrische Funktion der Molekularschicht 103 von der Ausrichtung der Polymerketten 201a-e abhängig. Die Oszillation der Polymerketten 201a-e bei ihrer Rückkehr in den Ruhezustand kann gleichsam eine Oszillation der dielektrischen Funktion der Molekularschicht 103 verursachen. Das elektrische Feld und die angelegte elektrische Spannung können durch die Oszillation der dielektrischen Funktion der Molekularschicht 103 charakteristisch modifiziert, insbesondere moduliert, werden. Diese charakteristische Modulation ist beispielsweise in der Strom-Spannungs-Kennlinie des Transistors 200 sichtbar, beispielsweise als Verschiebung oder Modulation der Strom-Spannungs-Kennlinie. Die Strom-Spannungs-Kennlinie des Transistors 200 kann zur Auswertung, insbesondere Erfassung der Modulation, differenziert oder normiert werden.

Ein Induzieren einer kollektiven Bewegung einer Molekülschicht auf einer Oberfläche mittels eines elektromagnetischen Feldes und die makroskopische Erfassung dieser Bewegung ist beispielsweise in Lahann, Joerg, et al. "A reversibly switching surface." Science 299(5605), p. 371-374, 2003 offenbart.

Die genaue Bewegung der Polymerketten 201a-e oder der orientierten Moleküle bei der Rückkehr in die Ruhelage kann von einer Vielzahl von Faktoren abhängen, insbesondere der Art der Moleküle oder Polymerketten 201a-e, der Länge der Moleküle oder Polymerketten 201a-e und der Dichte bzw. der Verteilung der Mehrzahl von Molekülen oder Polymerketten 201a-e auf dem Bauelementabschnitt 101 bzw. dem Transistor-Kanal 207. Aufgrund der großen Zahl von Molekülen oder Polymerketten 201a-e auf der Oberfläche kann sich daraus ein einzigartiges und schwer zu kopierendes Bewegungsmuster ergeben, welches die elektrische Charakteristik des elektronischen Bauteils verändert.

Durch Anlegen eines periodischen Spannungssignals, beispielsweise eines Rechtecksignals, an den Transistor-Source 209 und -Drain 211 des Transistors 200 können die Polymerketten 201a-e auch in eine dauerhafte Schwingungs- bzw. Oszillationsbewegung versetzt werden, welche die elektrische Charakteristik beeinflusst.

Die Molekularschicht 103, insbesondere die Polymerketten 201a-e in Fig. 2, können ausgebildet sein, ansprechend auf das elektrische Feld oder auf eine Änderung des elektromagnetischen Feldes in dem Anregungszustand ein elektromagnetisches Überlagerungsfeld zu erzeugen. Das elektrische Überlagerungsfeld kann mit dem elektromagnetischen Feld überlagerbar sein. Die Überlagerung des elektromagnetischen Feldes und des elektromagnetischen Überlagerungsfeldes kann eine Änderung der elektrischen Charakteristik des elektronischen Bauelementes 100 bewirken.

Das elektrische Feld oder die Änderung des elektromagnetischen Feldes kann ferner eine Änderung der Dipolmomente, insbesondere der kollektiven elektromagnetischen oder magnetischen Dipolmomente, der Molekularschicht 103 bzw. der Polymerketten 201a-e bewirken. Der Anregungszustand der Molekularschicht 103 kann durch die Änderung der Dipolmomente bestimmt sein.

Gemäß einer Ausführungsform ermöglicht die reversible Umorientierung der Molekularschicht 103, insbesondere der Polymerketten 201a-e, durch das elektrische Feld ein Umschalten zwischen hydrophoben und hydrophilen Oberflächenzuständen der Molekularschicht 103. Ein induzierbarer Wechsel zwischen hydrophoben und hydrophilen Oberflächenzuständen einer self assembled Monolayer ist beispielsweise in Lahann, Joerg, et al. "A reversibly switching surface." Science 299(5605), p. 371-374, 2003 offenbart.

Gemäß einer Ausführungsform wird die Molekularschicht 103, insbesondere eine Dipolschicht der Molekularschicht, durch eine Änderung des elektromagnetischen Feldes in eine elektrische Schwingung versetzt. Weil die Moleküle oder Polymerketten 201a-e ein elektromagnetisches Moment besitzen, können sie mit ihrer Schwingung im Ladungskanal des Transistors 200 eine Veränderung in den Transistorkennlinien in Abhängigkeit einer Source-Drain Spannung oder einer Gate-Spannung induzieren.

Der Anregungszustand der Molekularschicht 103, beispielsweise die Auslenkung der Polymerketten 201a-e, kann von einer Feldstärke des elektromagnetischen Feldes oder von einer zeitlichen Änderungsrate, insbesondere einer Frequenz, der Feldstärke des elektromagnetischen Feldes abhängen. Somit kann die elektrische Charakteristik des elektronischen Bauelementes 100 von der Feldstärke des elektromagnetischen Feldes oder von der zeitlichen Änderungsrate der Feldstärke des elektromagnetischen Feldes abhängig sein.

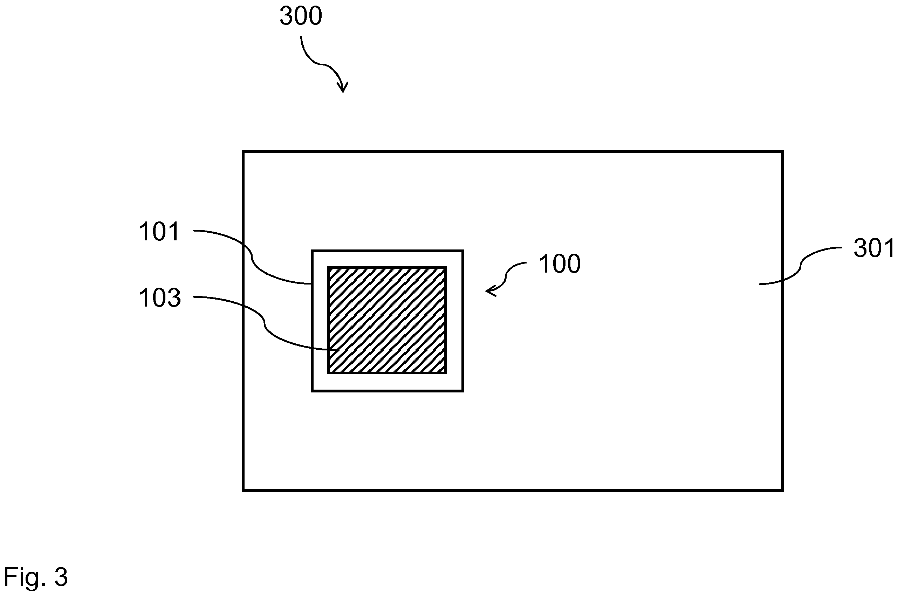

Fig. 3 zeigt eine schematische Darstellung eines Authentifikationsdokuments 300 mit dem elektronischen Bauelement 100 gemäß einer Ausführungsform.

Das elektronische Bauelement 100 kann ein Sicherheitsmerkmal zur Authentifizierung des Authentifikationsdokuments 300 bilden.

Das Authentifikationsdokument 300 kann ein Authentifikationsdokument zur Authentifikation einer Person sein. Das elektronische Bauelement 100 kann ein elektronischer Chip des Authentifikationsdokumentes 300 sein.

Das elektronische Bauelement 100 kann in den Dokumentenkörper 301 des Authentifikationsdokumentes 300, insbesondere zwischen zwei Materialschichten des Dokumentenkörpers 301, eingebettet oder einlaminiert sein.

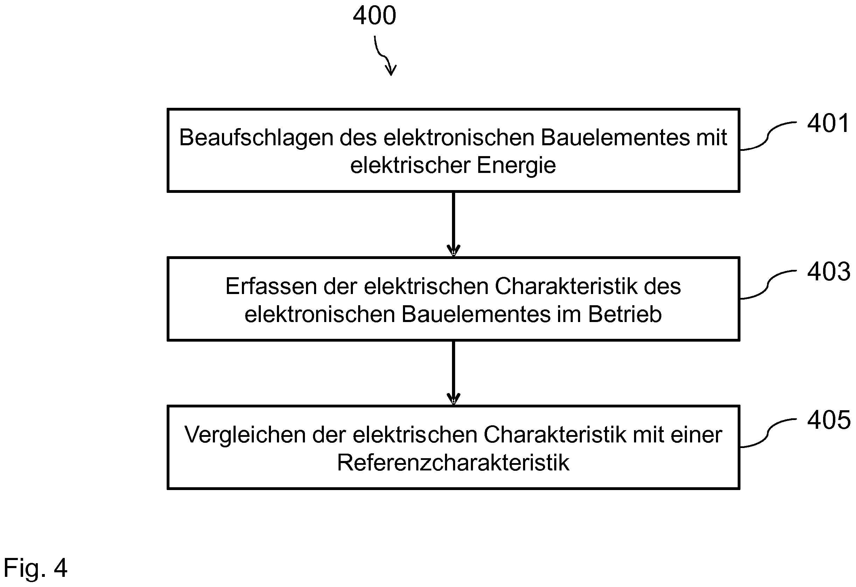

Fig. 4 zeigt ein Ablaufdiagramm eines Verfahrens zum Authentifizieren des elektronischen Bauelementes 100 gemäß einer Ausführungsform.

Das Verfahren 400 umfasst ein Beaufschlagen 401 des elektronischen Bauelementes mit elektrischer Energie, um das elektronische Bauelement 100 in Betrieb zu setzen, ein Erfassen 403 der elektrischen Charakteristik des elektronischen Bauelementes 100 im Betrieb, und ein Vergleichen 405 der elektrischen Charakteristik mit einer Referenzcharakteristik, um das elektronische Bauelement 100 zu authentifizieren.

Gemäß einer Ausführungsform umfasst das Verfahren 400 ferner ein Beaufschlagen des elektronischen Bauelementes 100 mit einem zusätzlichen äußeren elektromagnetischen Feld, und ein Erfassen der elektrischen Charakteristik des elektronischen Bauelementes 100 bei Vorliegen des äußeren elektromagnetischen Feldes.

Gemäß einer Ausführungsform kann mit dem Verfahren 400 eine zerstörungsfreie Detektion von kollektiven Molekül- bzw. Polymerschwingungen mit Hilfe einer Strom- bzw. Spannungsmessung an einem elektronischen Bauteil 100 realisiert werden.

Gemäß einer weiteren Ausführungsform kann bei deinem Vergleich von Strom-Spannungs-Kennlinien eines nicht-modifizierten Transistors und eines modifizierten Transistors ein charakteristisches Rauschsignal in der Strom-Spannungs-Kennlinie des modifizierten Transistors erfasst werden. Das charakteristische Rauschsignal kann durch die kollektive Oszillation der Molekularschicht erzeugt werden.

### Bezugszeichenliste

- 100: elektronisches Bauelement
- 101: Bauelementabschnitt
- 103: Molekularschicht

- 200: Transistor
- 201a-e: Polymerketten
- 203: Transistor-Gate
- 205: dielektrische Schicht
- 207: Transistor-Kanal
- 209: Transistor-Source
- 211: Transistor-Drain
- 213: funktionale Oberflächengruppe
- 215: Spacer
- 217: funktionale Kopfgruppe

- 300: Authentifikationsdokument
- 301: Dokumentenkörper

- 400: Verfahren zum Authentifizieren des elektronischen Bauelementes
- 401: Beaufschlagen
- 403: Erfassen
- 405: Vergleichen

## Patentansprüche

1. Elektronisches Bauelement (100), das ausgebildet ist, ein elektromagnetisches Feld zu erzeugen, wobei das elektronische Bauelement (100) ein Sicherheitsmerkmal für Authentifizierungszwecke bildet, mit:
einem Bauelementabschnitt (101), welcher dem elektromagnetischen Feld aussetzbar ist; und
einer Molekularschicht (103) zur Beeinflussung einer elektrischen Charakteristik des elektronischen Bauelementes (100), wobei die Molekularschicht auf dem Bauelementabschnitt (101) angeordnet und durch das elektrische Feld in einen Anregungszustand versetzbar ist, um die elektrische Charakteristik des elektronischen Bauelementes (100) zu beeinflussen,
wobei die Molekularschicht (103) eine Mehrzahl von orientierten Molekülen und/oder Polymerketten (201a-d) aufweist, welche auf dem Bauelementabschnitt (101) angeordnet und jeweils mit einem Ende chemisch oder physikalisch mit dem Bauelementabschnitt (101) gebunden sind,
**dadurch gekennzeichnet** das die orientierten Moleküle oder Polymerketten (201a-e) ansprechend auf das elektrische Feld aus einer Ruhelage auslenkbar und ausgebildet sind, bei einer Verringerung des elektromagnetischen Feldes in die Ruhelage zurückkehren, wobei der Anregungszustand durch die Auslenkung der orienteierten Moleküle oder Polymerketten (201a-e) aus der Ruhelage oder die Rückkehr der orientierten Moleküle oder Polymerketten (201a-e) in die Ruhelage bestimmt ist,
wobei das elektronische Bauteil einen Kontaktabschnitt aufweist, an welchem eine elektrische Größe, insbesondere eine elektrische Ausgangsspannung oder ein elektrischer Ausgangsstrom, welche die elektrische Charakteristik repräsentiert, abgreifbar ist.

2. Elektronisches Bauelement (100) nach Anspruch 1, wobei die Molekularschicht (103) ausgebildet ist, ansprechend auf das elektrische Feld oder auf eine Änderung des elektromagnetischen Feldes in dem Anregungszustand ein elektromagnetisches Überlagerungsfeld zu erzeugen, das mit dem elektromagnetischen Feld überlagerbar ist, wobei eine Überlagerung des elektromagnetischen Feldes und des elektromagnetischen Überlagerungsfeldes eine Änderung der elektrischen Charakteristik des elektronischen Bauelementes (100) bewirkt.

3. Elektronisches Bauelement (100) nach einem der vorstehenden Ansprüche, wobei das elektrische Feld oder eine Änderung des elektromagnetischen Feldes eine Änderung der Orientierung von Dipolmomenten, insbesondere elektromagnetischen oder magnetischen Dipolmomenten, der Molekularschicht (103), insbesondere einer Dipolschicht der Molekularschicht (103), bewirkt, und wobei der Anregungszustand durch die Änderung der Orientierung der Dipolmomente bestimmt ist.

4. Elektronisches Bauelement (100) nach einem der vorstehenden Ansprüche, wobei die Molekularschicht (103), insbesondere eine Dipolschicht der Molekularschicht (103), durch eine Änderung des elektromagnetischen Feldes in eine elektrische Schwingung versetzbar ist, welche den Anregungszustand bestimmt, und wobei die elektrische Schwingung die elektrische Charakteristik des elektronischen Bauteils (100) beeinflusst.

5. Elektronisches Bauelement (100) nach einem der vorstehenden Ansprüche, wobei der Anregungszustand von einer Feldstärke oder von einer zeitlichen Änderungsrate, insbesondere einer Frequenz, der Feldstärke des elektromagnetischen Feldes abhängig ist, wodurch die elektrische Charakteristik des elektronischen Bauelementes (100) von der Feldstärke des elektromagnetischen Feldes oder von der zeitlichen Änderungsrate der Feldstärke des elektromagnetischen Feldes abhängig ist.

6. Elektronisches Bauelement (100) nach einem der vorstehenden Ansprüche, wobei der Bauelementabschnitt (101) ein Oberflächenabschnitt, insbesondere ein elektromagnetisch passiver Oberflächenabschnitt, des elektronischen Bauelementes (100) ist, oder wobei der Bauelementabschnitt (101) vorgesehen ist, elektrische Ladung zu führen.

7. Elektronisches Bauelement (100) nach einem der vorstehenden Ansprüche, wobei die Molekularschicht (103) unmittelbar mit dem Bauelementabschnitt (101) verankert ist, insbesondere durch eine stoffschlüssige Bindung, kovalente Bindung, eine ionische Bindung, eine Wasserstoffbindung oder eine Absorptionsbindung, oder wobei die Molekularschicht (103) mittels einer Trägerschicht, insbesondere einer Metallschicht wie Goldschicht oder einem elektromagnetisch leitfähigem Oxid, oder einer dielektrischen Schicht oder einer Kunststoffschicht oder einer Halbleiterschicht, auf dem Bauelementabschnitt angeordnet ist.

8. Elektronisches Bauelement (100) nach einem der vorstehenden Ansprüche, wobei der Bauelementabschnitt (101) ausgebildet ist, elektrische Ladung zu führen und zumindest einen Teil des elektromagnetischen Feldes zu erzeugen.

9. Elektronisches Bauelement (100) nach einem der vorstehenden Ansprüche, wobei der Bauelementabschnitt (101) ein Halbleiter-Ladungskanal, insbesondere Transistor-Ladungskanal (207), ein Transistor-Gate, oder ein Dioden-Ladungskanal, oder ein Dielektrikum eines Kondensators ist.

10. Elektronisches Bauelement (100) nach einem der vorstehenden Ansprüche, wobei die elektrische Charakteristik eine elektrische Kennlinie, insbesondere eine Spannungskennlinie, eine Stromkennlinie, eine Strom-Spannungskennlinie, eine Leistungskennlinie, oder eine Frequenzcharakteristik ist.

11. Elektronisches Bauelement (100) nach einem der vorstehenden Ansprüche, wobei das elektronische Bauelement (100) ein elektronischer Halbleiterschaltkreis, insbesondere ein Chip, ein Transistor (200), eine Diode oder ein Kondensator ist.

12. Elektronisches Bauelement (100) nach einem der vorstehenden Ansprüche, wobei die Molekularschicht (103) eine physikalisch unklonbare Funktion (physical unclonable function, PUF) oder ein Sicherheitsmerkmal zur Authentifizierung des elektronischen Bauelementes (100) bildet.

13. Authentifikationsvorrichtung, mit:
einem Sicherheitsmerkmal zur Authentifizierung der Authentifikationsvorrichtung, wobei das Sicherheitsmerkmal durch das elektronische Bauelement (100) nach einem der Ansprüche 1 bis 12 gebildet ist.

14. Authentifikationsvorrichtung nach Anspruch 13, welche ein Authentifikationsdokument (300) zur Authentifikation einer Person ist, wobei das elektronische Bauelement (100) ein elektronischer Chip des Authentifikationsdokumentes (300) ist, oder wobei das elektronische Bauelement in einem Dokumentenkörper (301) des Authentifikationsdokumentes (300), insbesondere zwischen zwei Materialschichten des Dokumentenkörpers (301), eingebettet oder einlaminiert ist.

15. Verwendung des elektronischen Bauelementes nach einem der Ansprüche 1 bis 12 zur Maschinenauthentifizierung, insbesondere zur Authentifizierung von Maschinen durch Maschinen, oder zur Authentifizierung von tragbaren Geräten, insbesondere kommunikationsfähigen tragbaren Geräten.

16. Verfahren (400) zum Authentifizieren des elektronischen Bauelementes (100) nach einem der Ansprüche 1 bis 12, mit:
Beaufschlagen (401) des elektronischen Bauelementes mit elektrischer Energie, um das elektronische Bauelement in Betrieb zu setzen;
Erfassen (403) der elektrischen Charakteristik des elektronischen Bauelementes (100) im Betrieb; und
Vergleichen (405) der elektrischen Charakteristik mit einer Referenzcharakteristik, um das elektronische Bauelement (100) zu authentifizieren.

17. Verfahren (400) nach Anspruch 16, mit:
Beaufschlagen des elektronischen Bauelementes (100) mit einem zusätzlichen äußeren elektromagnetischen Feld; und
Erfassen der elektrischen Charakteristik des elektronischen Bauelementes bei Vorliegen des äußeren elektromagnetischen Feldes.

## Claims

1. An electronic component (100) configured to generate an electromagnetic field, wherein the electronic component (100) constitutes a security feature for authentication purposes, the electronic component (100) comprising:
a component section (101) which can be exposed to the electromagnetic field; and
a molecular layer (103) for influencing an electrical characteristic of the electronic component (100), wherein the molecular layer is arranged on the component section (101) and can be transferred into an excited state by the electric field in order to influence the electrical characteristic of the electronic component (100),
wherein the molecular layer (103) comprises a plurality of oriented molecules and/or polymer chains (201a-d) which are arranged on the component section (101) and which are each chemically or physically bonded at one end to the component section (101),
**characterized in, that** the oriented molecules or polymer chains (201a-e) are deflectable in response to the electric field from a rest position, and are configured to return to the rest position when the electromagnetic field is reduced, wherein the excited state is determined by the deflection of the oriented molecules or polymer chains (201a-e) from the rest position or the return of the oriented molecules or polymer chains (201a-e) to the rest position,
wherein the electronic component comprises a contact section at which an electrical variable, in particular an electrical output voltage or an electrical output current, which represents the electrical characteristic, can be tapped.

2. The electronic component (100) according to claim 1, wherein the molecular layer (103) is configured, in response to the electric field or to a change of the electromagnetic field in the excited state, to generate an electromagnetic superimposition field which can be superimposed with the electromagnetic field, wherein a superimposition of the electromagnetic field and the electromagnetic superimposition field causes a change of the electrical characteristic of the electronic component (100).

3. The electronic component (100) according to one of the preceding claims, wherein the electric field or a change of the electromagnetic field causes a change of the orientation of dipole moments, in particular electromagnetic or magnetic dipole moments, of the molecular layer (103), in particular a dipole layer of the molecular layer (103), and wherein the excited state is determined by the change of the orientation of the dipole moments.

4. The electronic component (100) according to one of the preceding claims, wherein the molecular layer (103), in particular a dipole layer of the molecular layer (103), can be set into an electrical oscillation which determines the excited state by a change of the electromagnetic field, and wherein the electrical oscillation influences the electrical characteristic of the electronic component (100).

5. The electronic component (100) according to one of the preceding claims, wherein the excited state is dependent on a field strength or a rate of change over time, in particular a frequency, of the field strength of the electromagnetic field, wherein the electrical characteristic of the electronic component (100) is dependent on the field strength of the electromagnetic field or on the rate of change of the field strength of the electromagnetic field over time.

6. The electronic component (100) according to one of the preceding claims, wherein the component section (101) is a surface section, in particular an electromagnetically passive surface section, of the electronic component (100), or wherein the component section (101) is provided to carry electrical charge .

7. The electronic component (100) according to one of the preceding claims, wherein the molecular layer (103) is anchored directly to the component section (101), in particular by a material bond, a covalent bond, an ionic bond, a hydrogen bond or an absorption bond, or wherein the molecular layer (103) is arranged on the component section by means of a carrier layer, in particular a metal layer such as gold layer or an electromagnetically conductive oxide, or a dielectric layer or a plastic layer or a semiconductor layer.

8. The electronic component (100) according to one of the preceding claims, wherein the component section (101) is configured to carry electrical charge and to generate at least a part of the electromagnetic field.

9. The electronic component (100) according to one of the preceding claims, wherein the component section (101) is a semiconductor charge channel, in particular transistor charge channel (207), a transistor gate, or a diode charge channel, or a dielectric of a capacitor.

10. The electronic component (100) according to one of the preceding claims, wherein the electrical characteristic is an electrical characteristic curve, in particular a voltage characteristic curve, a current characteristic curve, a current-voltage characteristic curve, a power characteristic curve, or a frequency characteristic.

11. The electronic component (100) according to one of the preceding claims, wherein the electronic component (100) is an electronic semiconductor circuit, in particular a chip, a transistor (200), a diode or a capacitor.

12. The electronic component (100) according to one of the preceding claims, wherein the molecular layer (103) constitutes a physically unclonable function, PUF, or a security feature for authenticating the electronic component (100).

13. An authentication device, comprising:
a security feature for authenticating the authentication device, wherein the security feature is constituted by the electronic component (100) according to one of claims 1 to 12.

14. The authentication device according to claim 13, which is an authentication document (300) for authenticating a person, wherein the electronic component (100) is an electronic chip of the authentication document (300), or wherein the electronic component is embedded or laminated in a document body (301) of the authentication document (300), in particular between two material layers of the document body (301).

15. Application of the electronic component according to one of claims 1 to 12 for machine authentication, in particular for authentication of machines by machines, or for authentication of portable devices, in particular portable devices capable of communication.

16. A method (400) for authenticating the electronic component (100) according to one of claims 1 to 12, the method (400) comprising:
applying (401) the electronic component with electrical energy in order to put the electronic component into operation;
detecting (403) the electrical characteristic of the electronic component (100) during operation; and
comparing (405) the electrical characteristic with a reference characteristic in order to authenticate the electronic component (100).

17. The method (400) according to claim 16, comprising:
applying the electronic component (100) with an additional external electromagnetic field; and
detecting the electrical characteristic of the electronic component in the presence of the external electromagnetic field.

## Revendications

1. Composant électronique (100), réalisé pour produire un champ électromagnétique, le composant électronique (100) constituant un signe de sécurité à des fins d'authentification, comprenant :
une partie de composant (101) qui peut être exposée au champ électromagnétique ; et
une couche moléculaire (103) pour influencer une caractéristique électrique du composant électronique (100), la couche moléculaire étant disposée sur la partie de composant (101) et pouvant être mise dans un état d'excitation par le champ électrique pour influencer la caractéristique électrique du composant électronique (100),
la couche moléculaire (103) présentant une pluralité de molécules et/ou de chaînes polymères orientées (201a-d) qui sont disposées sur la partie de composant (101) et par une extrémité chimiquement ou physiquement liées à la partie de composant (101),
**caractérisé en ce que** les molécules ou chaînes polymères orientées (201a-e) peuvent, en réponse au champ électrique, être déviées d'une position de repos et sont réalisées pour revenir à la position de repos en cas de diminution du champ électromagnétique, l'état d'excitation étant déterminé par la déviation des molécules ou chaînes polymères orientées (201a-e) de la position de repos ou le retour des molécules ou chaînes polymères orientées (201 a-e) à la position de repos,
le composant électronique présentant une partie de contact à laquelle une grandeur électrique, en particulier une tension électrique de sortie ou un courant électrique de sortie, qui représente la caractéristique électrique peut être prélevée.

2. Composant électronique (100) selon la revendication 1, dans lequel la couche moléculaire (103) est réalisée, en réponse au champ électrique ou à une variation du champ électromagnétique à l'état d'excitation, pour produire un champ électromagnétique de superposition qui peut être superposé au champ électromagnétique, une superposition du champ électromagnétique et du champ électromagnétique de superposition provoquant une variation de la caractéristique électrique du composant électronique (100) .

3. Composant électronique (100) selon l'une quelconque des revendications précédentes, dans lequel le champ électrique, ou une variation du champ électromagnétique, provoque une variation de l'orientation des moments dipolaires, en particulier des moments dipolaires électromagnétiques ou magnétiques, de la couche moléculaire (103), en particulier d'une couche dipolaire de la couche moléculaire (103), et l'état d'excitation étant déterminé par la variation de l'orientation des moments dipolaires.

4. Composant électronique (100) selon l'une quelconque des revendications précédentes, dans lequel la couche moléculaire (103), en particulier une couche dipolaire de la couche moléculaire (103), peut, par une variation du champ électromagnétique, être mise en oscillation électrique qui détermine l'état d'excitation, et l'oscillation électrique influençant la caractéristique électrique du composant électronique (100) .

5. Composant électronique (100) selon l'une quelconque des revendications précédentes, dans lequel l'état d'excitation dépend d'une intensité de champ ou d'un taux de variation dans le temps, en particulier d'une fréquence, de l'intensité de champ du champ électromagnétique, de sorte que la caractéristique électrique du composant électronique (100) dépend de l'intensité de champ du champ électromagnétique ou du taux de variation dans le temps de l'intensité de champ du champ électromagnétique.

6. Composant électronique (100) selon l'une quelconque des revendications précédentes, dans lequel la partie de composant (101) est une partie de surface, en particulier une partie de surface électromagnétiquement passive, du composant électronique (100), ou la partie de composant (101) est prévue pour conduire une charge électrique.

7. Composant électronique (100) selon l'une quelconque des revendications précédentes, dans lequel la couche moléculaire (103) est ancrée directement dans la partie de composant (101), en particulier par une liaison par contact de matière, une liaison covalente, une liaison ionique, une liaison hydrogène ou une liaison par absorption, ou la couche moléculaire (103) étant disposée sur la partie de composant au moyen d'une couche support, en particulier une couche métallique, comme une couche d'or ou un oxyde électromagnétiquement conducteur, ou une couche diélectrique ou une couche de matière synthétique ou une couche semi-conductrice.

8. Composant électronique (100) selon l'une quelconque des revendications précédentes, dans lequel la partie de composant (101) est réalisée pour conduire une charge électrique et pour produire au moins une partie du champ électromagnétique.

9. Composant électronique (100) selon l'une quelconque des revendications précédentes, dans lequel la partie de composant (101) est un passage de charge de semi-conducteur, en particulier un passage de charge de transistor (207), une grille de transistor ou un passage de charge de diodes ou un diélectrique d'un condensateur.

10. Composant électronique (100) selon l'une quelconque des revendications précédentes, dans lequel la caractéristique électrique est une courbe caractéristique électrique, en particulier une courbe caractéristique de tension, une courbe caractéristique de courant, une courbe caractéristique courant/tension, une courbe caractéristique de puissance ou une caractéristique de fréquence.

11. Composant électronique (100) selon l'une quelconque des revendications précédentes, dans lequel le composant électronique (100) est un circuit électronique à semi-conducteurs, en particulier une puce, un transistor (200), une diode ou un condensateur.

12. Composant électronique (100) selon l'une quelconque des revendications précédentes, dans lequel la couche moléculaire (103) constitue une fonction physique inclonable (« physical unclonable function », PUF) ou un signe de sécurité pour l'authentification du composant électronique (100).

13. Dispositif d'authentification, comprenant :
un signe de sécurité pour l'authentification du dispositif d'authentification, le signe de sécurité étant constitué par le composant électronique (100) selon l'une quelconque des revendications 1 à 12.

14. Dispositif d'authentification selon la revendication 13, qui est un document d'authentification (300) pour l'authentification d'une personne, le composant électronique (100) étant une puce électronique du document d'authentification (300), ou le composant électronique étant incorporé ou laminé dans un corps de document (301) du document d'authentification (300), en particulier entre deux couches de matériau du corps de document (301).

15. Utilisation du composant électronique selon l'une quelconque des revendications 1 à 12 pour l'authentification automatisée, en particulier pour l'authentification de machines par des machines, ou pour l'authentification d'appareils portables, en particulier d'appareils portables aptes à la communication.

16. Procédé (400) d'authentification du composant électronique (100) selon l'une quelconque des revendications 1 à 12, comprenant les étapes consistant à :
appliquer (401) de l'énergie électrique au composant électronique afin de mettre le composant électronique en marche ;
détecter (403) la caractéristique électrique du composant électronique (100) en cours de fonctionnement ; et
comparer (405) la caractéristique électrique avec une caractéristique de référence afin d'authentifier le composant électronique (100).

17. Procédé (400) selon la revendication 16, comprenant les étapes consistant à :
appliquer un champ électromagnétique externe supplémentaire au composant électronique (100) ; et
détecter la caractéristique électrique du composant électronique en présence du champ électromagnétique externe.
